# EUROPEAN PATENT SPECIFICATION

(11) **EP 2 261 898 B1**
(45) Date of publication and mention of the grant of the patent: **11.12.2019**
(21) Application number: 09007405.5
(22) Date of filing: 04.06.2009
(51) Int. Cl.: G10L 19/032, H04L 7/08, H04L 7/04

(54) **Audio codec with improved synchronisation**
Audiocodec mit verbesserter Synchronisation
Codec audio avec synchronisation améliorée

(43) Date of publication of application: 15.12.2010
(73) Proprietor: Qualcomm Technologies International, Ltd., Cambridge, Cambridgeshire CB4 OWZ (GB)
(72) Inventor: Trainor, David, Belfast BT8 8B (GB)
(74) Representative: FRKelly

(56) References cited:
- EP-A1- 0 734 136

## Description

### Field of the Invention

The present invention relates to audio codecs, especially audio codecs for use in Bluetooth systems. The invention relates particularly to synchronisation in audio codecs.

### Background to the Invention

Bluetooth is a short range wireless communications technology that can create personal area networks (PANs) between a variety of fixed and mobile devices, such as mobile phones, laptops, digital cameras, games consoles and media players. It is estimated that Bluetooth currently enjoys an installed base of almost two billion devices worldwide. Specifications and standards for Bluetooth operation are created and maintained by the Bluetooth Special Interest Group (SIG).

Although Bluetooth is a ubiquitous wireless communications technology, there are a number of technical considerations when using it for the wireless transmission of high-quality stereo audio.

The transmission of uncompressed stereo audio at the same sample rates found on CDs requires a data rate of approximately 1.4 Mbps. This transmission rate cannot be met by Bluetooth devices that do not support Extended Data Rate (EDR) transmission rates. Even if a device supports EDR, power consumption and link reliability reasons argue against such a high transmission rate. Therefore, it is necessary to compress the audio so that it can be successfully transmitted at a lower rate. The Advanced Audio Distribution Profile (A2DP) defines a low-complexity audio compression codec called Sub Band Codec (SBC). SBC is fully specified by the Bluetooth standards documents, is free for commercial use and is the only mandatory audio compression codec for Bluetooth. Any Bluetooth device that needs to communicate high-quality audio using the A2DP must implement SBC. However, the A2DP allows the use of additional optional audio compression codecs. Therefore, a suitably equipped pair of Bluetooth devices may choose to communicate audio using a compression codec other than SBC. The decision as to which compression codec to use is made as part of an initial exchange of messages when the communicating devices first establish the Bluetooth link. This is a process known as pairing.

Whilst SBC is commercially free and fairly simple to implement, it does have the drawback of adversely affecting the quality of the transmitted audio by the very nature of its compression methods. SBC is a lossy compression codec, meaning that it achieves a reduction in data rate by discarding elements of the audio data that it deems "irrelevant" to the human ear. Listeners of music decompressed from SBC complain about a variety of audible and unpleasant changes that have been introduced by the compression.

Audio compression algorithms introduce an additional level of latency or delay in the Bluetooth communications system. The compression and decompression functions require the buffering of a number of data samples in order to operate, which translates into increased delay. For some applications, long system delay is not a particular problem. For example, the user experience of wireless streaming of audio between, say, an iPod and a headset is not spoilt by long transmission delay. However interactive applications, where two-way wireless audio transfer is required, are very sensitive to delay. For example, online networked gaming where participants communicate using wireless gaming headsets requires delay to be kept short so that conversations can keep up with the gameplay and the reaction times of the participants.

In a Bluetooth audio communications system, the additional latency added by compressing the audio is typically small but not insignificant. Many audio compression schemes, including SBC, MP3 and AAC have a structure whereby compressed data is communicated in relatively large "chunks" or *frames* and the decoder buffers an entire frame before decompression of that frame even begins.

Accordingly, there is an opportunity to provide alternative audio compression codecs that are suitable for use with Bluetooth and which mitigate the problems outlined above.

One problem to be addressed in the development of an audio compression codec is how the decoder synchronises with the incoming data stream. A conventional approach to this problem is to transmit data in packets, each packet having a header and a payload. Synchronisation data is included in the header and is used by the decoder to synchronise with the incoming data stream. However, this technique reduces the level of compression that can be achieved by the codec since the header occupies bandwidth that may otherwise be available for the payload data.

European Patent Application EP 0 734 136 discloses a data transmission system in which synchronisation data is inserted into the digital data at a transmitter and detected by a receiver in order to synchronise transmission between the transmitter and receiver. EP 0 734 136 is not however concerned with audio codecs.

It would be desirable, therefore, to provide an improved means for synchronisation in an audio codec.

### Summary of the Invention

Accordingly, a first aspect of the invention provides an audio decoder as claimed in claim 1.

A second aspect of the invention provides a method of synchronising an audio decoder with an incoming data stream as claimed in claim 9.

Preferred features of the invention are recited in the dependent claims.

It will be apparent that the synchronisation technique used by the decoder to detect a synchronisation code in a data stream (as described hereinafter) is not limited to use with any particular technique for inserting the synchronisation code into the data stream.

Further advantageous aspects of the invention will become apparent to those ordinarily skilled in the art upon review of the following description of a preferred embodiment and with reference to the accompanying drawings.

### Brief Description of the Drawings

An embodiment of the invention is now described by way of example and with reference to the accompanying drawings in which:
Figure 1 is a block diagram of an audio compression encoder suitable for use with the present invention;
Figure 2 is a block diagram of an audio compression decoder suitable for use with the present invention, the decoder being suitable for use with the encoder of Figure 1 to provide an audio compression codec;
Figure 3 is a graph illustrating exemplary quantization bands that are suitable for use with the present invention;
Figure 4 is a table illustrating exemplary sub-band quantized values that are suitable for use with the present invention;
Figure 5 is a schematic diagram illustrating a synchronization code detection method embodying one aspect of the invention; and
Figure 6 is a schematic diagram illustrating a synchronization code detection method embodying one aspect of the invention and being particularly suited for use with Bluetooth.

### Detailed Description of the Drawings

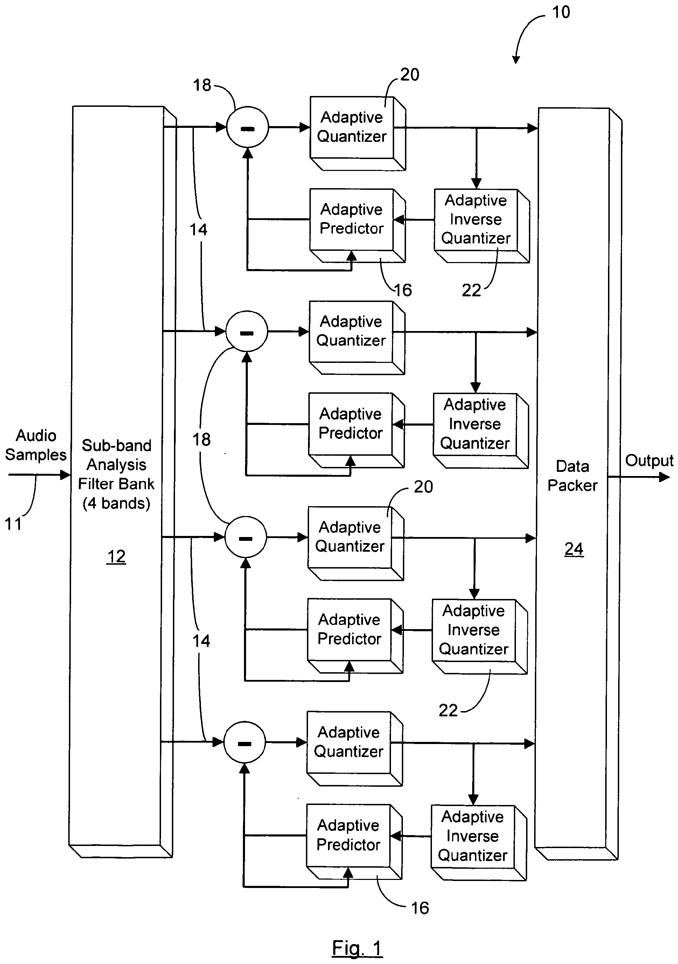

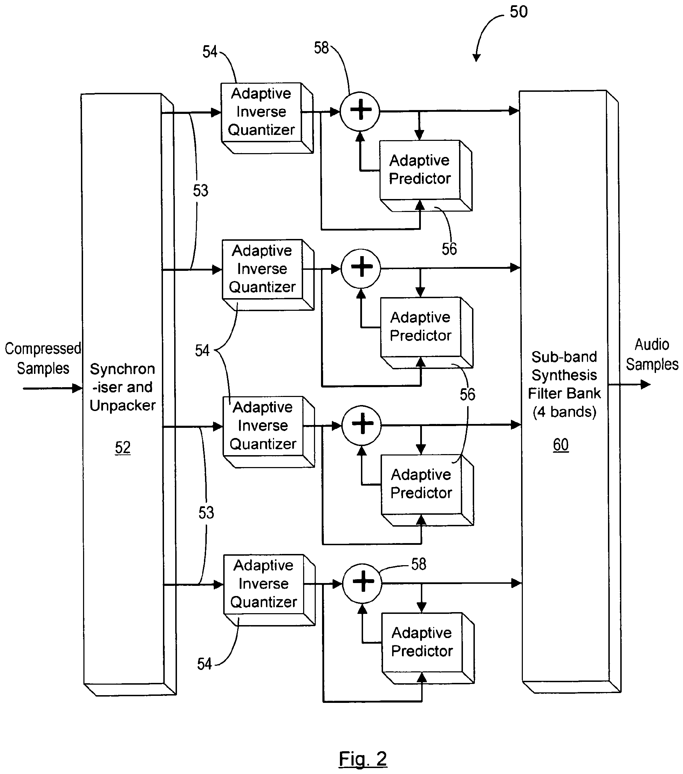

Referring now to Figures 1 and 2 of the drawings, there is shown an audio compression codec comprising an audio encoder 10 and an audio decoder 50. The encoder 10 and decoder 50 are suitable for use as an audio compression codec in systems that support Bluetooth. The encoder 10 receives an input signal comprising audio samples, i.e. from an audio signal sampled in the time domain. The encoder 10 processes the input signal to produce encoded, or compressed, output samples. The processing performed by the encoder 10 compresses the input signal such that it, or more particularly a compressed representation of it, may be transmitted to the decoder 50 with lower bandwidth requirements than would be necessary for the uncompressed signal. The decoder 50 receives the encoded samples and decodes them to produce time domain audio samples representing the input audio signal received by the encoder. The correspondence between the audio samples produced by the decoder 50 and the audio samples received by the encoder 10 is dependent on the compression techniques used by the encoder 10. The encoder 10 and decoder 50 communicate by means of a communications link (not illustrated) which may, for example, comprises a wireless link such as a Bluetooth link. In such cases, the encoder 10 is co-operable with a transmitter (not shown) for transmitting the compressed output samples to the decoder 50, and the decoder 50 is co-operable with a receiver (not shown) for receiving the compressed output samples. The transmitter and receiver each process the samples in accordance with the communications technology, e.g. Bluetooth, that they are configured to support.

Referring in particular to Figure 1, in the illustrated embodiment, the encoder 10 processes the input stream 11 of audio samples in groups of multiple, in this case 4, samples per audio channel (i.e. left and right channels). Each successive group of samples is processed by an analysis filter bank 12 that splits the input audio stream into multiple, in this case 4, parallel sub-band sample streams 14, where the sample rate of each sub-band stream 14 is a fraction of, in this case ¼ of, that of the input audio stream 11. The respective data in each sub-band stream 14 represents a respective subset of audio content from the input stream 11 that falls into a respective frequency range covered by each sub-band. In the present example, each sub-band is of equal width and covers ¼ of the range of audible frequencies. For example, if the audio samples are arriving at a rate of 48 kHz, corresponding to a total audio bandwidth of 24 kHz, then each sub-band covers a 6 kHz range of frequencies. The first sub-band passes the audio content within the 0-6 kHz, the second 6-12 kHz, the third 12-18 kHz and the final sub-band passes 18-24 kHz.

Since the input audio stream has been transformed into 4 parallel streams, each at a sample rate ¼ that of the original, the overall data rate has not changed, but a form of time to frequency transformation has been carried out, since each sub-band stream represents a particularly frequency range. This allows the data in each sub-band to undergo lossy compression independently and with different levels of loss or distortion in each band. Since the human ear is more sensitive to audio in some frequency ranges than others, additional levels of compression can be gained by more aggressively compressing the frequency bands to which the ear is relatively insensitive.

In the preferred embodiment, lossy compression of the data in each sub-band is carried out using differential coding and quantization. For each sub-band stream 14, a respective adaptive predictor filter 16 is provided and acts as a predictor, providing a predicted value for upcoming samples from the sub-band filter bank 12. A respective error calculator 18 is provided for each sub-band stream 14 and is arranged to receive, in respect of each sub-band sample of the respective sub-band stream 14, the actual sub-band value from the sub-band filter bank 12 and the corresponding predicted sub-band value from the predictive filter 16, and to calculate the difference between the predicted value and the actual value to produce a prediction error value. As a sub-band sample is created by the sub-band filter bank 12, the difference between its value and its predicted value is produced by the error calculator 18. If the predictive filter 16 is performing well then the magnitude of this difference, or prediction error value, is small compared to the sub-band sample. Since the prediction error tends to be small, it can be communicated using fewer bits than the corresponding sub-band sample and hence transmitting prediction errors offers a form of compression.

The levels of compression are increased by quantising the prediction error value so that the quantized error value can be represented using still fewer bits. To this end, the encoder 10 includes a respective quantizer 20 for each sub-band stream 14 arranged to receive the prediction error values and to produce respective quantized error values. It is the quantization operation that introduces the lossy aspect of the compression, since the quantization causes information to be discarded and is a process that can only be approximately inverted. Within the encoder 10, a respective inverse quantizer 22 is arranged to perform inverse quantization on the error values and the output is provided to the respective predictive filter 16. Inverse quantization is carried out to provide approximate prediction error samples to stimulate the predictive filters 16. Hence, the predictor filters 16 produce predictions of future samples emerging from the sub-band filter bank 12 based on a history of previous prediction error values.

In the illustrated embodiment, the same differential coding, quantization, inverse quantization and prediction techniques are applied independently to the respective data in each sub-band stream 14. However, the sophistication and accuracy of the respective prediction filters 16 and/or the levels of approximation employed by the respective quantizers 20 may differ from one sub-band to the next, for example based on the relative sensitivity of the human ear to audio frequencies in the respective sub-band.

The encoder 10 further includes a data packer 24 for concatenating the respective quantized prediction error values for each sub-band to provide a concatenated quantized error value in respect of each group of input audio samples. Each concatenated quantized error value provides a respective compressed output sample of the encoder 10. The data from the respective audio channels is interleaved and so the encoder 10 processes the respective channels alternately, e.g. each channel being processed alternately with the other, one groups of input samples at a time.

By way of example, when utilised in conjunction with Bluetooth transmission, the illustrated encoder 10 consumes 4 input 16-bit audio samples at a time and produces a single 16-bit compressed sample, hence compressing the input audio by a factor of 4.

It will be understood that in alternative embodiments, the encoder may be in general arranged to process audio samples in groups of at least one, but typically a plurality of, samples per audio channel. Further, in alternative embodiments, the encoder may be in general arranged to split the audio signal into any practicable number of sub-band sample streams, or even not to split the audio signal into sub-band streams. The configuration of the encoder, and correspondingly of the decoder, would be adapted accordingly as would be apparent to a skilled person.

It will be seen from the foregoing that the preferred encoder 10 of Figure 1 implements a Sub-band Adaptive Differential Pulse Code Modulation (SB-ADPCM) compression scheme employing lossy compression to reduce the required network transmission rate for an audio input signal. In the illustrated example, the encoder 10 achieves a fixed compression ratio of 4:1, thereby requiring only 25% of the network transmission rate associated with the communication of uncompressed audio.

Referring now to Figure 2, the corresponding decoder 50 is described. The decoder 50 must initially synchronise itself to the incoming data stream 51 that it receives from the encoder 10. In this embodiment, it is assumed that the encoder 10 and decoder 50 communicate via a Bluetooth link. In accordance with Bluetooth, data is transmitted in groups, or packets, of 8-bit bytes that do not necessarily correspond conveniently with the compressed output samples from the encoder 10. For example, the compressed samples output from the encoder 10 are 16 bits long in the present example and, for stereo transmission, are transmitted in channel interleaved fashion and so compressed samples for the left and right channels are sent alternately. Therefore, the decoder 50 needs to initially deduce from the sequence of bytes in a received Bluetooth-compatible packet whether a particular byte is the most or least significant byte of a compressed output sample from the encoder 10, and whether it belongs to the output sample for the left or the right channel. This creates four possibilities that need to be resolved and the decoder 50 accomplishes this by examining the incoming data stream 51 for synchronisation data. As is described in more detail hereinafter, the synchronisation data is preferably added by the quantization process during encoding. Once the synchronisation data has been found with a high degree of reliability, it uniquely identifies the data from the left and right audio channels and which bytes are the most and least significant bytes of the compressed output samples.

Once synchronisation has been achieved, the compressed samples are unpacked such that the bits of each compressed sample are split into the respective quantized prediction error value for each sub-band. In the decoder 50 of Figure 2, the synchronisation and unpacking is performed by a synchronisation and unpacking module 52. The module 52 thus produces a respective data stream 53 for each sub-band, each data stream 53 comprising the respective quantized prediction error values. An adaptive inverse quantizer 54 is provided for each sub-band in order to perform inverse quantization of the quantized prediction error values. A respective adaptive predictor filter 56 is provided for each sub-band and is arranged to regenerate the same predicted sample values that were produced by corresponding predictor filters 16 at the encoder 10. For each sub-band, a respective adder 58 is provided for adding the inverse-quantized prediction error values produced by the inverse quantizers 54 to the respective predicted sample values produced by the predictor filters 56. By adding an inverse-quantized prediction error to the corresponding regenerated prediction sample value, a close approximation to the respective original sub-band sample of the respective sub-band stream 14 is obtained. In this embodiment, the form of the inverse quantization and prediction performed by the quantizer 54 and predictor filter 56 respectively is identical to that performed for the corresponding sub-band in the encoder 10.

The respective sub-band samples produced by the respective inverse quantizers 56 are input to a sub-band synthesis filter bank 60 in order to produce audio samples that are representative of the input audio samples received by the encoder 10. The sub-band filter bank 60 operates in the opposite sense to the filter bank 24 of the encoder 10. That is, instead of analysing an input stream and splitting it into multiple, in this case 4, lower-rate streams covering multiple, in this case 4, frequency ranges, the filter bank 60 takes the lower-rate streams and synthesises the original full-rate stream from it. Hence the consumption of a single compressed sample by the decoder 50 results in multiple, in this case 4, output audio samples being produced. The structure and individual filter specification of the synthesis filter bank 60 is similar in many respects to the analysis filter bank 24 in the encoder 10, but is not identical.

The codec 10, 50 is adaptive in two major ways. Firstly, the predictor filter in each sub-band adapts its coefficients based on a history of its input and previous output values. The adjustments are carried out to try to drive the prediction error towards zero and minimise it. The second area of adaptation is around the quantisation and inverse quantisation processes. The width or spacing of the quantisation levels is dynamically adjusted to quantise the signal with minimal distortion. Hence, if the quantiser input (prediction error) is small, the quantiser will tend to reduce the quantisation level spacing, so that small values can be quantised with little additional error. Similarly, if the quantiser input starts to get big, then the quantiser will increase the quantisation level spacing. Failure to do so would result in an inaccurate quantised representations of large input values, even if the outermost quantisation level is chosen.

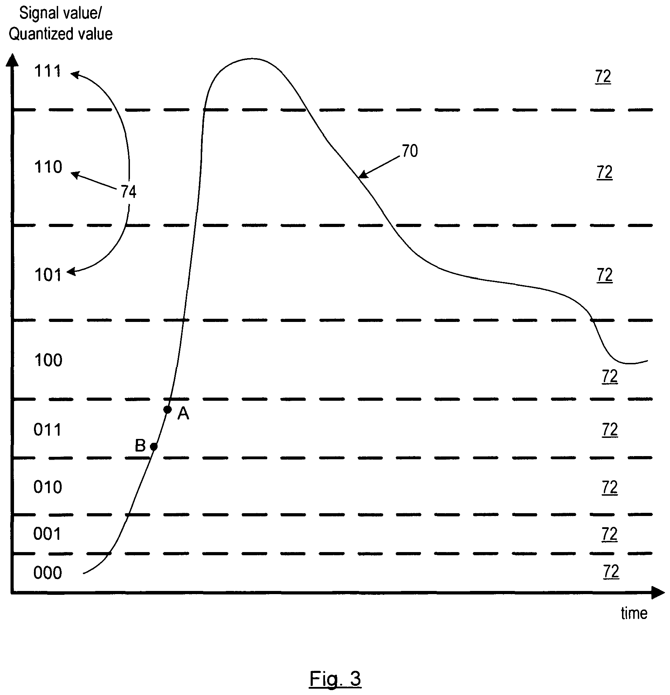

Referring now in particular to Figures 3 to 6, there is described a synchronisation technique embodying aspects of the present invention that allows the decoder 50 to identify the boundaries of successive compressed samples produced by the encoder 10 within data streams that have been transmitted to the decoder 50 using communications technologies, such as Bluetooth, that do not naturally preserve the sample boundaries. Such communications technologies deliver the compressed sample values sequentially (i.e. in the sequence that they are produced by the encoder) to the decoder 50, but the boundaries of the compressed samples are arbitrarily aligned to the boundaries of the data blocks produced by a communications receiver (not shown) that supports a particular communication technology, such as Bluetooth, and provides the incoming data stream 51 to the decoder 50. As a result, the decoder 50 monitors a plurality of data blocks provided by the communications receiver and extracts properly aligned compressed samples for subsequent decompression. In order to allow the decoder 50 to achieve this task, the encoder 10 periodically inserts synchronisation data into the compressed sample stream, as is described in more detail below.

The form of the synchronisation data inserted by the encoder 10 is flexible. Typically, the synchronisation data comprises a sequence of bits embodying a synchronisation code for detection by the decoder. Any pattern of bits can theoretically be employed. The synchronisation data is inserted periodically into the stream of compressed samples emanating from the encoder 10. It is possible to tailor the synchronisation pattern to be a sequence of bits that is less likely to be replicated within the non-synchronisation data (i.e. the quantized error values), which increases the average speed with which the decoder 50 initially identifies the repetitive synchronisation pattern within the data supplied by the communications receiver.

In the preferred embodiment, a respective bit of the synchronisation data is embedded within each inter-channel compressed sample. Each inter-channel compressed sample consists of one compressed sample value for each channel of audio, for example two compressed values in the case of stereo audio transmission. Successive bits of the synchronisation data are embedded in successive inter-channel compressed samples. In the preferred embodiment, when the last bit of the synchronisation data has been embedded, the sequence wraps back to the first bit in the pattern again such that the synchronisation data is continually being inserted into the compressed data. It is noted that different audio streams sharing the same communications link can have different synchronisation patterns, allowing the decoder to perform stream de-multiplexing based on knowledge of the different synchronisation patterns.

Each compressed sample value within an inter-channel sample is itself made up of multiple, in this case 4, concatenated quantized prediction error values, one produced from each sub-band stream 14. A naive implementation of synchronisation data insertion may involve choosing one sub-band, quantising the respective N-bit sub-band sample value to N-1 bits instead of N bits, and using the spare 1-bit space created by the quantization to carry a respective bit of the synchronisation sequence. The disadvantage of this approach is that quantising the sub-band value in order to reduce its length by 1 bit introduces an undesirable additional level of coding distortion and audio quality degradation. The preferred synchronisation techniques significantly reduce this effect by using a more sophisticated procedure for the insertion of synchronisation data. In preferred embodiments, the insertion of synchronisation data is performed simultaneously with the quantization of the sub-band values (or more particularly the quantization of the prediction error values) by the quantizers 20, before subsequent concatenation into a compressed output value.

The preferred synchronisation insertion procedure is predicated on certain simple characteristics of the preferred quantization process. During quantization of a prediction error value, each quantizer 20 is capable of selecting from a plurality of quantization bands, each quantization band covering a respective range of values that the prediction error value could take and being represented by a respective quantization output value. When the quantizer 20 selects a quantization band for a prediction error value, the respective quantization output value becomes the quantized prediction error value. To facilitate the preferred synchronisation technique, the quantization bands are arranged in such a way that the least significant bit (or respective other designated bit) of the quantized output value associated with a particular quantization band is the inverse of the least significant bit (or respective other designated bit) of the quantized output values associated with each of the quantization bands immediately above and below the quantization band in question. An example is shown in Figure 3 where a continuous waveform 70 is quantized using eight quantization bands 72, the quantized output value 74 associated with each quantization band being, by way of example only, a 3-bit label. It is noted that, typically, the quantization bands are not equally sized. It can be seen from Figure 3 that the least significant bit of each quantized output value 74 is the inverse of the least significant bit of the quantized values immediately above and below. It is noted that the quantization output value may comprise fewer or more than 3 bits. Moreover, the number of bits making up the quantization output value may differ between sub-bands. For example, the quantizer may use a higher number of bits for the quantization output value (i.e. a higher resolution) for sub-bands in respect of which the human ear is more sensitive than for sub-bands in respect of which the human ear is relatively insensitive.

The preferred synchronisation data insertion procedure performed by the encoder 10 is as follows. For each sub-band stream 14, an optimal quantized output value is determined for each higher-precision, i.e. non-quantized, prediction error value presented as input to the quantizer 20. To this end, the quantizer 20 deduces which quantization band of input values contains the particular input value presented to the quantizer 20, and takes the optimal quantized output value to be the quantized output value associated with that quantization band, which is the quantized output value that most accurately approximates the non-quantized input value. In addition to computing the optimal quantized output value, the quantizer 20 also calculates an alternative quantized output value for the respective prediction error value. The alternative quantized output value is the quantized output value associated with the quantization band of input values either immediately above or immediately below the quantization band associated with the optimal quantized output value. The decision as to whether the alternative quantized output value should be above or below the optimal value can be made by any convenient means, e.g. by random selection or made more precisely by calculating which of the possible alternative quantization output values provides a more accurate approximation to the original high-precision input value. The latter approach may be implemented by defining a suitable cost function based on a measured distance between the high-precision input value and the respective band of input values associated with each of the possible alternative quantized output values. Larger distances may penalised with higher values of "cost". The distance and cost may be measured in terms of any suitable criteria. By way of example, Figure 3 shows two high-precision input values marked by the points A and B. The optimal quantized value for both these points is 011. However, the alternative quantized value for point A will be 100 whilst the alternative quantized value for point B will be 010. This is because the distance from point A to the band of input values associated with the quantized value 100 is shorter than the distance to the band of input values associated with the quantized value 010. The opposite situation holds for point B.

Significantly, as a result of the arrangement of adjacent quantization output values, the least significant bit of an optimal quantized value is always the inverse of the least significant bit of the corresponding alternative quantized value. The respective optimal quantized value, alternative quantized value and, preferably, the cost of using the alternative value instead of the optimal value are calculated for all sub-bands, and in respect of all individual compressed output values to be included the inter-channel compressed output sample, i.e. in respect of all prediction error values that will produce a quantized prediction error value that will form part of a block of quantized prediction error values into which the synchronisation data is to be inserted - in this example two successive compressed output samples, one for each audio channel. Using stereo transmission as an example, the calculations are carried out across 8 sub-bands for each inter-channel compressed output sample: the 4 sub-bands associated with the compressed output value for the left audio channel and the 4 sub-bands associated with the compressed output value for the right audio channel.

Having calculated the optimal quantized values, the quantizer 20 performs a logical operation, preferably a logical exclusive-or (XOR) operation, on respective corresponding bits, preferably the respective least significant bits, of all the optimal quantized values. The result, which in the present case will comprise a 1-bit value, is compared with the bit of the synchronisation code that needs to be embedded into the respective block of quantized prediction error values, i.e. in this example all individual compressed output values to be included the inter-channel compressed output sample. If the two values match, then no adjustment is carried out to the optimal quantized values and all the optimal quantized values are concatenated to form the respective compressed inter-channel sample value. If the two values differ, then the quantizer 20 examines the cost data in respect of all sub-bands relating to the inter-channel output sample to find the sub-band with the lowest cost (penalty) for choosing the respective alternative quantized value instead of the optimal one. For this sub-band, the alternative quantized value is concatenated into the corresponding output value instead of the optimal quantized value. Since the least significant bit of the alternative quantized value is the inverse of that of the optimal quantized value, this creates the desired condition that the synchronisation bit being embedded equals the logical XOR of the least significant bits of all quantized sub-band values.

In an alternative embodiment, instead of selecting between sub-bands on the basis of lowest cost, the quantizer may simply select any one of the sub-bands and replace the respective optimal quantized value with the alternative one.

It will be understood that, instead of establishing the condition that the synchronisation bit being embedded equals the logical XOR of the least significant bits of all quantized sub-band values, the quantizer may alternatively be arranged to establish the condition that the synchronisation bit being embedded is the inverse of the logical XOR of the least significant bits of all quantized sub-band values.

The last step in the embedding process is to overwrite the least significant bit (or other selected bit) of a particular quantized sub-band value within a particular compressed output value within the inter-channel output sample with the value of the synchronisation bit to be embedded. Any sub-band can be nominated to have its least significant bit (or other selected bit) overwritten, as long as the same sub-band is overwritten for every inter-channel output sample (or other block of output data into which a synchronisation bit is to be embedded) and the decoder knows which sub-band and bit position to expect the embedded synchronisation bit to reside in.

When the encoder 10 is adapted for Bluetooth stereo transmission, where each inter-channel output sample contains a respective 16-bit compressed output value for the left and right channels, it is preferred that the least significant bit of the quantized value for the 4^{th} sub-band in the left channel is overwritten with the synchronisation bit.

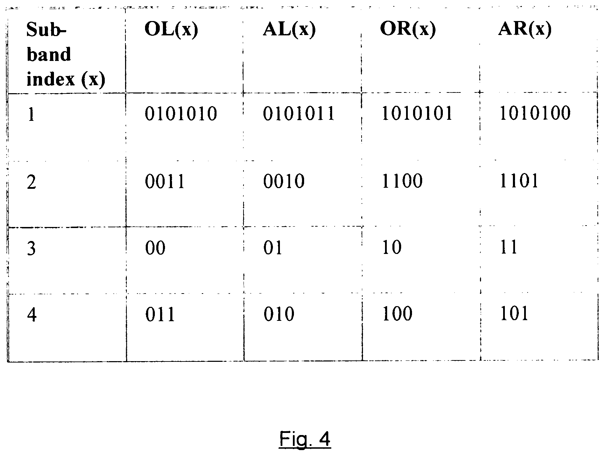

Referring now to Figure 4, a specific example of the insertion process is described by way of example. The example assumes stereo transmission with two 16-bit compressed output values in each inter-channel output sample. Each 16-bit compressed value is subdivided into a group of 7 bits, a group of 4 bits, a group of 2 bits and a group of 3 bits. These bit groupings carry the respective quantized output values for the 4 sub-bands, with the lowest sub-band quantized value occupying 7 bits and the highest sub-band quantized value occupying 3 bits. Let OL(x), where 1 ≤ x ≤ 4, represent the optimal quantized value for the x^{th} sub-band in the left channel and let OR(x) represent the optimal quantized value for the x^{th} sub-band in the right channel. Let AL(x) and AR(x) be the corresponding alternative quantized values for OL(x) and OR(x). For this particular example, the embedding of a synchronisation pattern bit is considered for the case when OL, OR, AL and AR values have the specific groups of bits defined in the table of Figure 4.

When the least significant bits of the 8 optimal quantized values are XORed together the resulting bit is a '1'. Assuming, however, that the next bit from the synchronisation pattern that requires embedding is a '0', then the quantizer 20 examines which of the 8 sub-bands incurs the smallest quality cost when the alternative value is used instead of the optimal one. Assume that, for this example, the second sub-band of the right channel is thus identified. Then the value of AR(2) will be concatenated into the compressed output value for the right channel instead of OR(2), and now the least significant bits of all 8 sub-band values XOR together to deliver the desired synchronisation pattern bit value of '0'. This '0' overwrites the least significant bit of the OL(4) value, turning it from 011 to 010. Therefore, the transmitted grouping of bits for the 16-bit sample value for the left channel is:
010 | 00 | 0011 | 0101010
Note the use of separators only to indicate the distinct contributions from the 4 sub-bands. Similarly, the transmitted grouping of bits for the 16-bit sample value for the right channel is:
100 | 10 | 1101 | 1010101

Typically, the quantiser performs all the computation carried out per sub-band i.e. calculation of the optimal code, alternative code and distance penalty. The data packer conveniently carries out the processing carried out across all sub-band values i.e. working out which sub-band has the minimum penalty, deciding if the alternative code needs to be used for that sub-band, overwriting with the synchronisation bit, etc. However, this arrangement is based purely on convenient logical partitioning of the software or other means that implements the encoder and may be implemented in other ways.

In the foregoing description, the insertion process is described in the context of using the least significant bits of the quantized values for distinguishing between optimal and alternative quantized values, for performing the XOR operation and for carrying the synchronisation bits. In alternative embodiments, any other respective corresponding bit of the quantized values may be used for some or all of these purposes. Moreover, the XOR operation need not necessarily be performed on a respective bit from each quantized value that goes to make up an inter-channel output sample, or other block of output data. Instead, any group of bits from one or more of the quantized values that make up a block of output data into which a synchronisation bit is to be inserted could be used for this purpose. It is preferred to use the least significant bit as described above since, by definition, it carries the least significant information and so adjustments to it will have the least affect on the quality of the audio output. If an alternative scheme is adopted, the labelling of the quantisation levels should be correspondingly adjusted such that an appropriate respective designated bit from adjacent levels are the inverse of each other. Hence it is possible to define a synchronisation scheme across a different group of bits without incurring additional distortion. Clearly, the decoder must be arranged to accommodate whatever arrangement is adopted by the encoder.

It will be understood that other logical operations other than the XOR may be used so long as the selected logical operation allows the overwritten bit to be recalculated by the decoder using the synchronisation bit and the least-significant quantised prediction error bits (or other respective bits of the quantised prediction error values) that are not overwritten. In general, any logical operation or function that allows the missing bit to be regenerated by combining all of the known (relevant) bits received by the decoder into that function may be used.

The synchronisation data insertion process described above is more complex than the naive approach of quantising one sub-band value to N-1 bits instead of N bits and writing the synchronisation data bit into the spare bit location thus created. However, the synchronisation data insertion scheme described above has the advantage of introducing a much lower level of additional coding loss and distortion. In part, this is due to the preferred use of the distance-based cost function to determine the sub-band where selection of the alternative quantized value incurs the smallest amount of additional audio distortion. Another advantageous effect is that no additional distortion is incurred when the XOR of the least significant bits of the all the optimal quantized values happens to equal the value of the synchronisation data bit to be embedded. When this occurs there is no need to select the alternative quantized value for any sub-band. The probability of this desirable situation occurring is dependent on the statistics of the audio data being compressed, but theory would predict that it occurs on 50% of synchronisation data bit insertions, which is significant.

Before the decoder 50 can begin decompression of the received audio data, it must first determine the boundaries of the compressed output values generated by the encoder within the stream of data values provided by the communications receiver. As indicated previously, the number of compressed bits delivered by each sample from the communications receiver need not necessarily bear any simple relationship to the number of bits in a compressed output value from the encoder. Hence, the decoder 50 must detect the synchronisation pattern, or code, inserted by the encoder 10 (which will appear periodically in the incoming data stream in the preferred embodiment).

In the preferred embodiment, each successive bit of the synchronisation code is inserted in a known bit location within each inter-channel output sample. As an example, in the Bluetooth scheme described above where each inter-channel output sample is 32 bits long, containing a respective 16-bit compressed output value for the left and right channels, the decoder 50 knows that successive bits of the synchronisation code will be found with a 32-bit spacing.

In general, successive bits of the synchronisation code are spaced N bits apart and no specific relationship between communications receiver sample boundaries and encoder output sample boundaries is assumed. Hence, when the decoder 50 is trying to acquire the synchronisation code initially, or after previous loss of synchronisation, it monitors the data arriving from the communications receiver across N different "phases". Successive bits in each phase are spaced N bits apart in the data stream coming from the communications receiver and, with respect to the receiver data stream, each phase is offset from the previous phase by 1 bit.

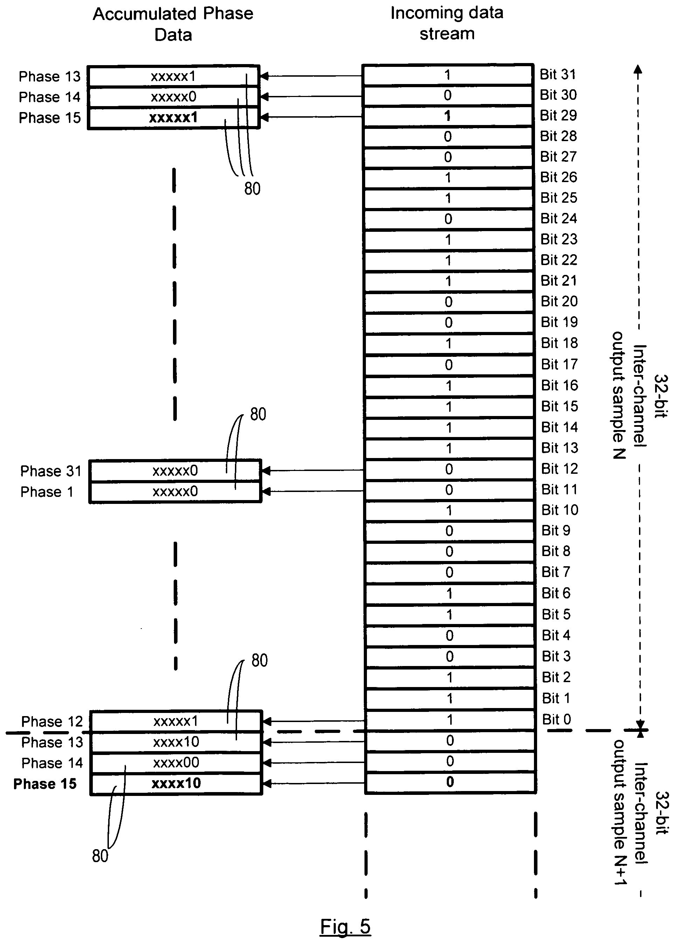

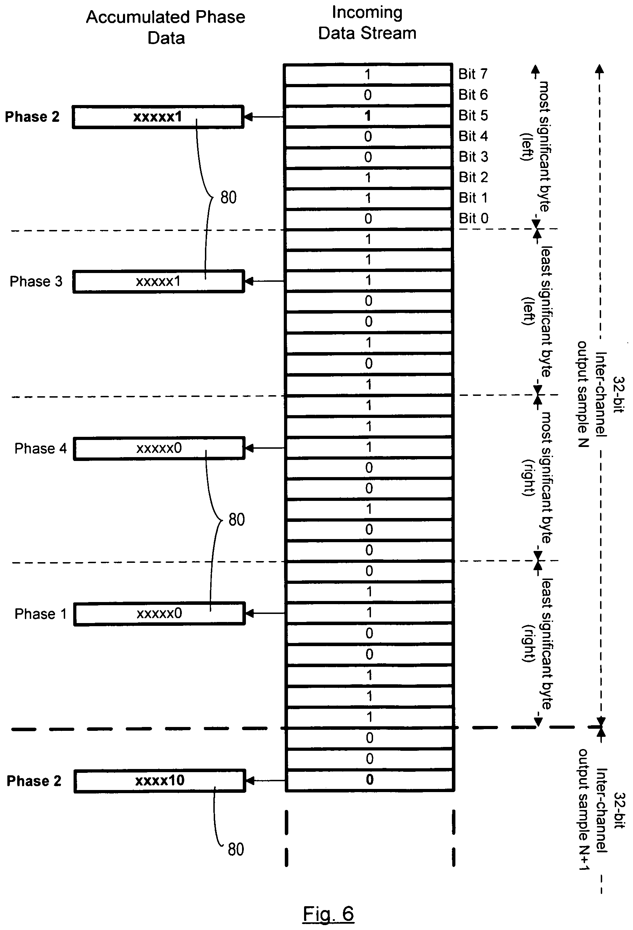

In order to monitor the data in each phase, the decoder 50 includes, or at least has access to means for storing phase data as the incoming data stream is received. The storage means, which is not shown in Figure 2, can take any suitable form and is represented in Figures 5 and 6 by a respective memory location 80 for each phase. As data is received by the decoder 50, it stores each successive bit in a respective memory location 80 representing a respective phase. After the first N successive bits have been stored in respective memory locations 80, the decoder repeats the cycle by returning to the first of the memory locations for storing the N+1th bit and so on. Thus, in each memory location 80 a string of bit values is built up, the string representing a sequence of bits from the data stream each spaced apart by N bits. After sufficient data has been gathered from the communications receiver, the expected synchronisation code will appear in the memory location associated with one of the N phases. It is possible to locate successive bits of the synchronisation code at different positions within the output sample, although this complicates the compilation of the strings for each phase and the subsequent synchronisation process.

The preferred process is illustrated in Figure 5, where an inter-channel output sample containing two 16-bit compressed output values is used for illustrative purposes and the synchronisation data bit is assumed to lie in bit 29 of each 32-bit inter-channel output sample. For purposes of this example, it is arbitrarily assumed that the receiver starts the detection process from bit 11 of an inter-channel sample, resulting in bit 11 of each successive inter-channel sample being placed in the first accumulated data phase. Therefore, for this specific example, the synchronisation pattern will be incrementally built up in phase 15.

In the illustrated example, successive bits from successive inter-channel samples are added to the accumulated data in respective memory locations 80 for each phase in a round-robin fashion. Once the synchronisation code reliably appears in the accumulated data for the relevant phase, phase 15 in this example, then the corresponding bit of the 32-bit inter-channel output samples, bit 29 in this example, has been identified and other value and sample boundaries can be deduced from this.

In order to reduce the likelihood of the decoder 50 mistakenly synchronising to non-synchronisation data that happens to duplicate the synchronisation code, it is preferred that synchronisation is not considered to be complete until a plurality of consecutive periods of the synchronisation pattern is detected within a particular phase. Similarly, whilst the decoder 50 is synchronised (during which time it may continue to monitor the synchronisation code in the incoming data stream to maintain synchronisation), occasional transmission errors can cause the synchronisation code to be absent for a short time. To avoid prematurely abandoning valid synchronisation as a result of this, once the decoder 50 has achieved initial synchronisation, the synchronisation pattern must be absent for a plurality of consecutive periods of the code before the decoder 50 abandons the existing synchronisation and all N phases are again monitored to establish synchronisation afresh.

For specific types of underlying communications technologies, optimisations can be made to the general synchronisation acquisition and monitoring scheme described above. This is particularly true when the compressed data is transmitted by Bluetooth, or any similar technology that sends data organised as packets (blocks) and wherein the size of the compressed output blocks produced by the encoder is a multiple of the size of the packets produced by the transmission technology (or vice versa). For example, Bluetooth uses packets comprising 8-bit bytes and the preferred encoder 10 described herein produces compressed output values that are each 16 bits long. This allows for a simple relationship between the encoder output blocks and the Bluetooth packets. Hence, when a Bluetooth packet is delivered to the decoder 50, the decoder already knows that any particular byte can be only one of four possible values:
1. The least significant byte of the compressed output value for the left channel
2. The most significant byte of the compressed output value for the left channel
3. The least significant byte of the compressed output value for the right channel
4. The most significant byte of the compressed output value for the right channel

From this it can be seen that, when Bluetooth (or comparable technology) is employed, the decoder only needs to monitor 4 different "phases" when synchronising to inter-channel output samples consisting of stereo compressed output values, each of length 16 bits. This is a reduction by a factor of 8 when compared to the 32 different phases that would have to be monitored in the general case, where simple packing of the 16-bit compressed output values into two 8-bit bytes was not assumed. This process is illustrated in Figure 6, where an inter-channel output sample containing two 16-bit compressed output values is used for illustrative purposes and the synchronisation data bit is assumed to lie in bit 5 of the 8-bit byte that is the most significant byte of the compressed output value for the left audio channel. For purposes of this example, it is arbitrarily assumed that the decoder 50 starts the detection process from the least significant byte of the right channel of an inter-channel output sample, resulting in bit 5 of this byte being placed in the first accumulated data phase. Therefore, for this specific example, the synchronisation code will be incrementally built up in phase 2.

In the illustrated example, successive bits from successive inter-channel samples are added to the accumulated data in the respective memory locations 80 for each phase in a round-robin fashion. Once the synchronisation code reliably appears in the accumulated data for the relevant phase, phase 2 in this example, then the most significant byte of the sample value in the left channel has been identified and other value and sample boundaries can be deduced from this.

Once the decoder 50 has established valid synchronisation, it is known that the synchronisation data bits identify a particular bit location within the current inter-channel output sample. For example, in the preferred Bluetooth embodiment, the synchronisation bit is known to identify the least significant bit of the quantized value from the 4^{th} sub-band in the compressed output value from the left audio channel. The decoder 50 must also know the channel order in which compressed output values within an inter-channel output sample are sent. For example, the encoder for the Bluetooth embodiment operates on stereo audio and sends the compressed output value for the left audio channel before the corresponding compressed output value for the right channel. Being provided with this information, once the decoder 50 achieves synchronisation it can identify the compressed output value and inter-channel output sample boundaries within the data stream supplied by the communications receiver.

With synchronisation established, the preferred decoder 50 performs a further task before decompression can take place. The insertion of the synchronisation code bit into the inter-channel output sample overwrites the original (and true) value of the least significant bit of the quantized error value for a particular sub-band. Once the synchronisation bit from a particular inter-channel output sample has been examined by the decoder 50 and its synchronisation monitoring function has been updated accordingly, that particular synchronisation bit serves no further purpose. At this point, it is desirable to restore the original value of the bit of the quantized value that was overwritten during synchronisation data insertion. This can be readily achieved based on the knowledge that the least significant bits of all the quantized values for the inter-channel sample, including the bit that was lost via synchronisation bit insertion, all XOR together to yield a single bit value that matches the current synchronisation bit. Using the self-inverting properties of the XOR operation, it can be shown that the overwritten bit can always be regenerated by XORing the current synchronisation bit and the other (known) quantized value least significant bits together.

The specific example used in the previous sub-section to demonstrate synchronisation bit insertion will now be reused to demonstrate regeneration of the overwritten bit. In this example, the left and right sample values are respectively:
010 | 00 | 0011 |0101010
and
100 | 10 | 1101 | 1010101

As mentioned above, in this example the least significant bit of the quantized value for the 4^{th} sub-band in the compressed output value for the left channel carries the synchronisation bit. This value is '0' in this example. When this is XORed together with the least significant bits for the 7 remaining quantized sub-band values, the resulting bit has a value of '1', which equals the value of the bit originally overwritten by the synchronisation data bit (see the value of the least significant bit of OL(4) in Figure 4).

Encoders and decoders embodying the invention may implemented in computer software and/or electronic hardware as would be apparent to a skilled person. The invention is not limited to the embodiments described herein, which may be modified or varied without departing from the scope of the invention. The scope of the invention is defined by the appended claims.

## Claims

1. An audio decoder adapted to receive a data stream of data bits arranged in a series of blocks, each block comprising a plurality of data bits, wherein each successive block in the data stream includes a respective successive bit of a synchronisation code located at a common bit position in the respective block, the decoder comprising means for synchronising the decoder with the data stream, the synchronising means comprising: means for storing a plurality of strings of bit values taken from the received data stream, wherein successive bit values taken for each string are spaced apart in the received data stream by a number of bits that is equal to the size of the blocks; and means for comparing said strings against said synchronisation code, wherein upon detection of at least one string that matches said synchronisation code, said synchronisation means is arranged to synchronise the decoder with the received data stream by correlating the location of the matching string in the received data stream with said common bit position, and wherein each data block comprises a respective audio sample for the left and right channels of a stereo audio transmission stream, each audio sample comprising at least one byte.

2. A decoder as claimed in claim 1, wherein said storing means is arranged to create a respective string of bit values for each bit position in said block.

3. A decoder as claimed in claim 1, wherein said data stream comprises a plurality of packets, each packet being of the same size, each block being transmitted in a plurality of said packets such that each packet represents a respective part of a respective block, said common bit position being located in one of said respective parts, and wherein said storing means is arranged to store a respective string for only one bit position in each packet, said one bit position having a location in each packet that corresponds with the location of said common bit position in said one of said respective block parts, and wherein said synchronisation means is arranged to synchronise the decoder with the received data stream by correlating the location of the matching string in the received data stream with said one of said respective block parts and with the location of said common bit position in said one of said respective block parts.

4. A decoder as claimed in claim 3, wherein each data block corresponds in size to a whole number of said packets, each data block part being the same size as a packet.

5. A decoder as claimed in claim 4, wherein each respective part of a block comprises a respective data byte.

6. A decoder as claimed in any preceding claim, wherein each audio sample comprises two data bytes.

7. A decoder as claimed in any preceding claim, arranged to determine that synchronisation is achieved upon detection of said synchronisation code in at least two successive instances of one of said strings.

8. A decoder as claimed in any preceding claim, wherein after synchronisation is established, the decoder is arranged to determine that synchronisation is lost upon failure to detect said synchronisation string in at least two successive instances of one of said strings.

9. A method of synchronising an audio decoder with an incoming data stream of data bits arranged in a series of blocks, each block comprising a plurality of data bits, wherein each successive block in the data stream includes a respective successive bit of a synchronisation code located at a common bit position in the respective block, the method comprising: storing a plurality of strings of bit values taken from the received data stream, wherein successive bit values taken for each string are spaced apart in the received data stream by a number of bits that is equal to the size of the blocks; comparing said strings against said synchronisation code; and synchronising, upon detection of at least one string that matches said synchronisation code, the decoder with the received data stream by correlating the location of the matching string in the received data stream with said common bit position and wherein each data block comprises a respective audio sample for the left and right channels of a stereo audio transmission stream, each audio sample comprising at least one byte.

## Patentansprüche

1. Audio-Decoder, ausgelegt zum Empfangen eines Datenstroms von Datenbits, die in einer Serie von Blöcken angeordnet sind, wobei jeder Block mehrere Datenbits umfasst, wobei jeder sukzessive Block in dem Datenstrom ein jeweiliges sukzessives Bit eines Synchronisationscode beinhaltet, der sich an einer gemeinsamen Bitposition in dem jeweiligen Block befindet, wobei der Decoder Mittel zum Synchronisieren des Decoders mit dem Datenstrom umfasst, wobei das Synchronisationsmittel Folgendes umfasst: Mittel zum Speichern mehrerer aus dem empfangenen Datenstrom genommener Ketten von Bitwerten, wobei für jede Kette genommene sukzessive Bitwerte in dem empfangenen Datenstrom durch eine Anzahl von Bits beabstandet sind, die gleich der Größe der Blöcke ist; und Mittel zum Vergleichen der genannten Ketten mit dem genannten Synchronisationscode, wobei das genannte Synchronisationsmittel nach dem Erkennen wenigstens einer mit dem genannten Synchronisationscode übereinstimmenden Kette zum Synchronisieren des Decoders mit dem empfangenen Datenstrom durch Korrelieren des Orts der übereinstimmenden Kette in dem empfangenen Datenstrom mit der genannten gemeinsamen Bitposition ausgelegt ist und wobei jeder Datenblock ein jeweiliges Audio-Sample für den linken und rechten Kanal eines Stereo-Audioübertragungsstroms umfasst, wobei jedes Audio-Sample wenigstens ein Byte umfasst.

2. Decoder nach Anspruch 1, wobei das genannte Speichermittel zum Erzeugen einer jeweiligen Kette von Bitwerten für jede Bitposition in dem genannten Block ausgelegt ist.

3. Decoder nach Anspruch 1, wobei der genannte Datenstrom mehrere Pakete umfasst, wobei jedes Paket dieselbe Größe hat, wobei jeder Block in mehreren der genannten Pakete so gesendet wird, dass jedes Paket einen jeweiligen Teil eines jeweiligen Blocks repräsentiert, wobei sich die genannte gemeinsame Bitposition in einem der genannten jeweiligen Teile befindet und wobei das genannte Speichermittel zum Speichern einer jeweiligen Kette für nur eine Bitposition in jedem Paket ausgelegt ist, wobei die genannte eine Bitposition einen Ort in jedem Paket hat, der dem Ort der genannten gemeinsamen Bitposition in dem genannten einen der genannten jeweiligen Blockteile entspricht, und wobei das genannte Synchronisationsmittel zum Synchronisieren des Decoders mit dem empfangenen Datenstrom durch Korrelieren des Orts der übereinstimmenden Kette in dem empfangenen Datenstrom mit dem genannten einen der genannten jeweiligen Blockteile und mit dem Ort der genannten gemeinsamen Bitposition in dem genannten einen der genannten jeweiligen Blockteile ausgelegt ist.

4. Decoder nach Anspruch 3, wobei die Größe jedes Datenblocks einer ganzen Zahl der genannten Pakete entspricht, wobei jeder Datenblockteil dieselbe Größe hat wie ein Paket.

5. Decoder nach Anspruch 4, wobei jeder jeweilige Teil eines Blocks ein jeweiliges Datenbyte umfasst.

6. Decoder nach einem vorherigen Anspruch, wobei jedes Audio-Sample zwei Datenbytes umfasst.

7. Decoder nach einem vorherigen Anspruch, ausgelegt zum Feststellen, dass Synchronisation nach Erkennung des genannten Synchronisationscode in wenigstens zwei sukzessiven Instanzen von einer der genannten Ketten erzielt ist.

8. Decoder nach einem vorherigen Anspruch, wobei nach dem Erzielen von Synchronisation der Decoder zum Feststellen ausgelegt ist, dass Synchronisation verloren ist, wenn die genannte Synchronisationskette nicht in wenigstens zwei sukzessiven Instanzen von einer der genannten Ketten erkannt wird.

9. Verfahren zum Synchronisieren eines Audio-Decoders mit einem eingehenden Datenstrom von in einer Serie von Blöcken angeordneten Datenbits, wobei jeder Block mehrere Datenbits umfasst, wobei jeder sukzessive Block in dem Datenstrom ein jeweiliges sukzessives Bit eines Synchronisationscode beinhaltet, der sich an einer gemeinsamen Bitposition in dem jeweiligen Block befindet, wobei das Verfahren Folgendes beinhaltet: Speichern mehrerer Ketten von aus dem empfangenen Datenstrom genommenen Bitwerten, wobei für jede Kette genommene sukzessive Bitwerte in dem empfangenen Datenstrom durch eine Anzahl von Bits beabstandet sind, die gleich der Größe der Blöcke ist; Vergleichen der genannten Ketten mit dem genannten Synchronisationscode; und Synchronisieren, nach dem Erkennen wenigstens einer mit dem genannten Synchronisationscode übereinstimmenden Kette, des Decoders mit dem empfangenen Datenstrom durch Korrelieren des Orts der übereinstimmenden Kette in dem empfangenen Datenstrom mit der genannten gemeinsamen Bitposition, und wobei jeder Datenblock ein jeweiliges Audio-Sample für den linken und rechten Kanal eines Stereo-Audioübertragungsstroms umfasst, wobei jedes Audio-Sample wenigstens ein Byte umfasst.

## Revendications

1. Un décodeur audio adapté de façon à recevoir un flux de données de bits de données agencé en une série de blocs, chaque bloc comprenant une pluralité de bits de données, où chaque bloc successif dans le flux de données comprend un bit successif respectif d'un code de synchronisation situé à une position binaire commune dans le bloc respectif, le décodeur comprenant un moyen de synchronisation du décodeur avec le flux de données, le moyen de synchronisation comprenant : un moyen de conservation en mémoire d'une pluralité de chaînes de valeurs binaires prélevées à partir du flux de données reçu, où des valeurs binaires successives prélevées pour chaque chaîne sont espacées dans le flux de données reçu d'un nombre de bits qui est égal à la taille des blocs, et un moyen de comparaison desdites chaînes audit code de synchronisation, où après la détection d'au moins une chaîne qui est appariée avec ledit code de synchronisation, ledit moyen de synchronisation est agencé de façon à synchroniser le décodeur avec le flux de données reçu par la corrélation de l'emplacement de la chaîne appariée dans le flux de données reçu avec ladite position binaire commune, et où chaque bloc de données comprend un échantillon audio respectif pour les canaux gauche et droit d'un flux de transmission audio stéréo, chaque échantillon audio comprenant au moins un octet.

2. Un décodeur selon la Revendication 1, où ledit moyen de conservation en mémoire est agencé de façon à créer une chaîne de valeurs binaires respective pour chaque position binaire dans ledit bloc.

3. Un décodeur selon la Revendication 1, où ledit flux de données comprend une pluralité de paquets, chaque paquet étant de la même taille, chaque bloc étant transmis dans une pluralité desdits paquets de sorte que chaque paquet représente une partie respective d'un bloc respectif, ladite position binaire commune étant située dans une desdites parties respectives, et où ledit moyen de conservation en mémoire est agencé de façon à conserver en mémoire une chaîne respective pour uniquement une position binaire dans chaque paquet, ladite une position binaire possédant un emplacement dans chaque paquet qui correspond à l'emplacement de ladite position binaire commune dans ladite une partie desdites parties de bloc respectives, et où ledit moyen de synchronisation est agencé de façon à synchroniser le décodeur avec le flux de données reçu par la corrélation de l'emplacement de la chaîne appariée dans le flux de données reçu avec ladite une partie desdites parties de bloc respectives et avec l'emplacement de ladite position binaire commune dans ladite une partie desdites parties de bloc respectives.

4. Un décodeur selon la Revendication 3, où chaque bloc de données correspond en taille à un nombre entier desdits paquets, chaque partie de bloc de données étant de la même taille qu'un paquet.

5. Un décodeur selon la Revendication 4, où chaque partie respective d'un bloc comprend un octet de données respectif.

6. Un décodeur selon l'une quelconque des Revendications précédentes, où chaque échantillon audio comprend deux octets de données.

7. Un décodeur selon l'une quelconque des Revendications précédentes, agencé de façon à déterminer qu'une synchronisation est atteinte après la détection dudit code de synchronisation dans au moins deux instances successives d'une desdites chaînes.

8. Un décodeur selon l'une quelconque des Revendications précédentes, où après l'établissement de la synchronisation, le décodeur est agencé de façon à déterminer que la synchronisation est perdue après l'échec de la détection de ladite chaîne de synchronisation dans au moins deux instances successives d'une desdites chaînes.

9. Un procédé de synchronisation d'un décodeur audio avec un flux de données entrant de bits de données agencé en une série de blocs, chaque bloc comprenant une pluralité de bits de données, où chaque bloc successif dans le flux de données comprend un bit successif respectif d'un code de synchronisation situé à une position binaire commune dans le bloc respectif, le procédé comprenant : la conservation en mémoire d'une pluralité de chaînes de valeurs binaires prélevées à partir du flux de données reçu, où des valeurs binaires successives prélevées pour chaque chaîne sont espacées dans le flux de données reçu d'un nombre de bits qui est égal à la taille des blocs, la comparaison desdites chaînes audit code de synchronisation, et la synchronisation, après la détection d'au moins une chaîne qui est appariée avec ledit code de synchronisation, du décodeur avec le flux de données reçu par la corrélation de l'emplacement de la chaîne appariée dans le flux de données reçu avec ladite position binaire commune et où chaque bloc de données comprend un échantillon audio respectif pour les canaux gauche et droit d'un flux de transmission audio stéréo, chaque échantillon audio comprenant au moins un octet.
